# EUROPEAN PATENT APPLICATION

(11) **EP 2 801 336 A2**
(43) Date of publication of application: **12.11.2014**
(21) Application number: 13167433.5
(22) Date of filing: 13.05.2013
(51) Int. Cl.: A61C 8/00, A61C 13/00

(54) **Implant system**

(30) Priority: 07.05.2013 TR 201305446
(71) Applicant: Serce, Ibrahim, Izmir (TR)
(72) Inventor: Serce, Ibrahim, Izmir (TR)
(74) Representative: Cayli, Hülya

(57) **Abstract**

An implant system (S) according to the present invention suitable for use in dental implant applications comprises at least one implant (1) fixed to the jawbone to provide a tooth root for a prosthetic tooth and at least one unprocessed abutment (2) provided with at least one body having a block structure which may have different geometric shapes and being monolithic with said implant (1). By virtue of the implant system (S) according to the present invention, the painful treatment process experienced by the respective patient during an implant treatment is reduced to a single step and shortened accordingly. Additionally, by virtue of the monolithic structure of the implant (1) and the unprocessed abutment (2), the need for connection elements providing the connection of the implant (1) and abutment is eliminated and thus, both the production costs are reduced and the problems are avoided which may occur when these elements break down.

## Description

### Field of Invention

The present invention relates to a customized implant system.

### Prior Art

Tooth implant treatment is a process in which a prosthetic tooth is fixed in place of a missing tooth in the mouth. Within this context, an implant which is preferably in the form of a screw is fixed to the jawbone as a synthetic tooth root. Then, the prosthetic tooth is placed on the part of the implant which is left over the gingiva. An abutment being left at the exterior of gingiva is used to fasten the prosthetic tooth to the implant. Said abutment can vary in terms of size and shape according to the size of a tooth to be implanted, and to the mouth and jaw structure of the respective person. According to the prior art, standard abutments are produced and used which may comply with different jaw and tooth structures. In the patent document WO2012134051A2 according to the prior art, for instance, is disclosed a method and system for producing abutments in standard sizes and shapes. These abutments produced in standard sizes and shapes, however, cannot comply with any type of jaw structures. For this reason, customized abutment production has gained popularity particularly in the last years. Similarly, the implant has to have a structure which complies with the jaw structure, the bone depth, and the bone density of the respective person, and at the same time, has to comply with the abutment to be used. In this context, implant producers have put an effort to provide a compliant and healthy combination between the implant and abutment in the productions made in different geometric shapes and to connect the implant and abutment to each other using screws or angular conical designs. These approaches, however, require the use of very accurate techniques and increase the costs. On the other hand, some problems may be encountered in the implant-abutment connection methods, e.g. when the screws break, become loose, or when the abutment breaks down at the site where the implant is fastened.

### Brief Description of Invention

An implant system according to the present invention suitable for use in dental implant applications comprises at least one implant fixed to the jawbone to provide a tooth root for a prosthetic tooth and at least one unprocessed abutment provided with at least one body having a block structure which may have different geometric shapes and being monolithic with said implant. By virtue of the implant system according to the present invention, the painful treatment process experienced by the respective patient during an implant treatment is reduced to a single step and shortened accordingly. Additionally, by virtue of the monolithic structure of the implant and the unprocessed abutment, the need for connection elements providing the connection of the implant and abutment is eliminated and thus, both the production costs are reduced and the problems are avoided which may occur when these elements break down.

### Object of Invention

The object of the present invention is to develop a customized implant system.

Another object of the present invention is to develop an inexpensive and high-quality implant system.

### Description of Figures

Illustrative embodiments of the customized implant system developed according to the present invention are illustrated in the accompanying figures briefly described hereunder.
Figure 1 is a perspective view of a system according to the present invention.
Figure 2 is a side cross-sectional view of the system according to the present invention.
Figure 3 is a perspective view of an embodiment of the system according to the present invention.
Figure 4 is another perspective view of the system according to the present invention.
Figure 5-10 is a perspective view of the use of the system according to the present invention in various production systems.

The components in said figures are individually referenced as following:

| | |
|---|---|
| Implant system | (S) |
| Production system | (S1) |
| Implant | (1) |
| Thread | (1a) |
| Unprocessed abutment | (2) |
| Connection element | (2a) |
| Socket | (2b) |
| Retaining member | (2c) |

### Description of Invention

In a tooth implant operation, an implant in the form of a screw is fixed to the jawbone, andat least one tooth prosthesis is fixed to this implant. A support element called as an abutment is used to fix the tooth prosthesis to the implant. One end of an abutment is fixed to the implant and the other end of an abutment left out of the gingiva is fixed to the prosthetic tooth. Generally, the part of the abutment fixed to the implant has a standard structure, but various fitting or compliance problems are encountered during the connection of the implant and abutment. In this context, a customized (the term customized as used herein means the ability to shape the implant system in compliance with the mouth/jaw structure of the respective person and the shape and size of the prosthetic tooth) implant system is developed according to the present invention.

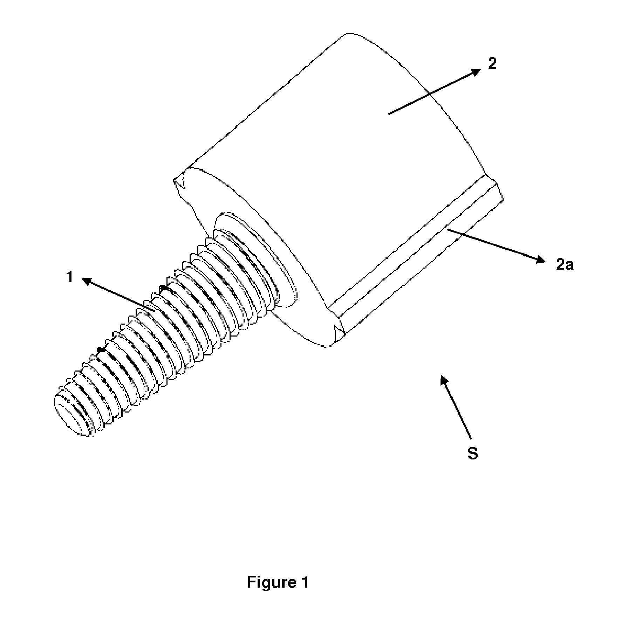

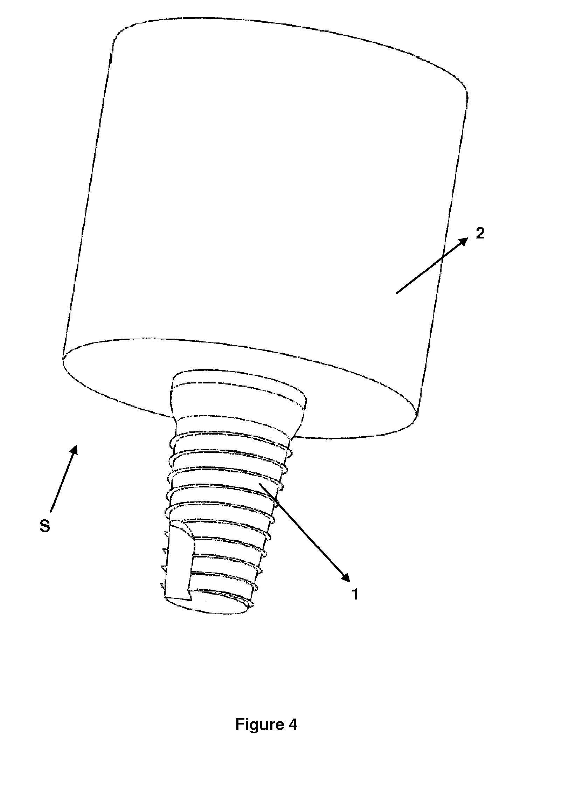

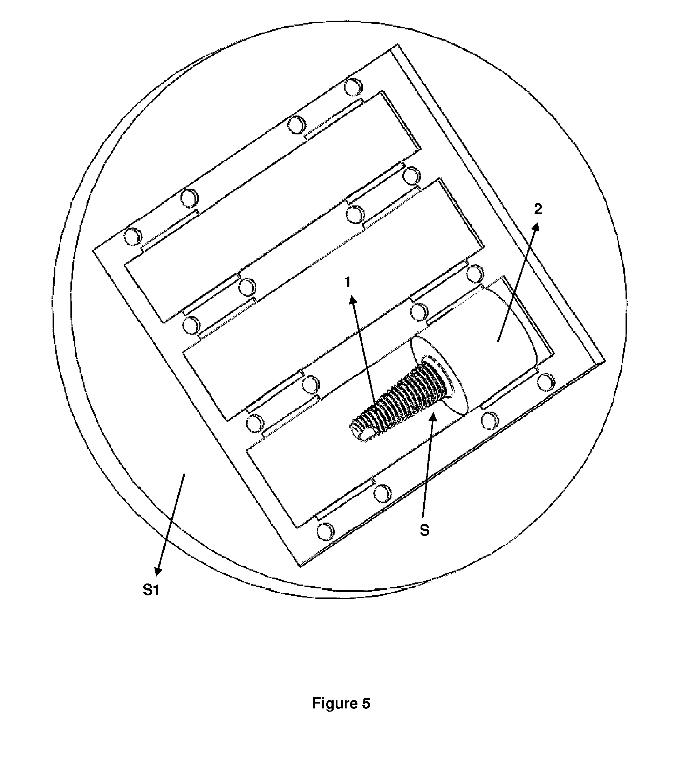

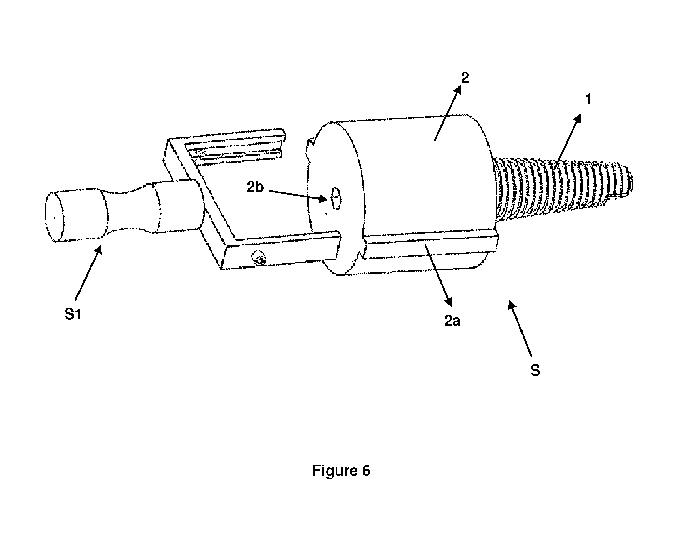

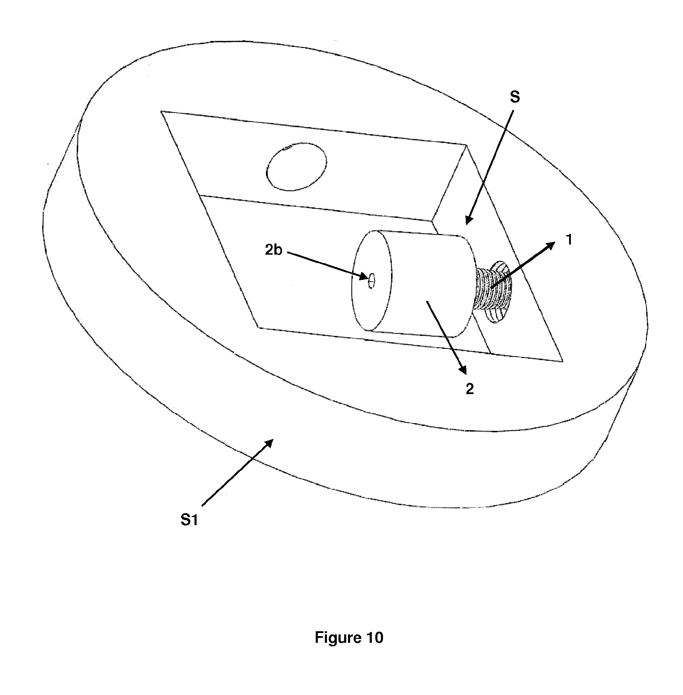

As illustrated in figures 1-4, an implant system (S) according to the present invention comprises at least one implant (1) fixed to the jawbone to provide a tooth root for a prosthetic tooth and of which the part fixed to the jawbone preferably has a threaded structure (in the form of a screw), and at least one unprocessed abutment (2) provided with at least one body having a block structure which may have different geometric shapes and being monolithic with said implant (1). When an implant treatment is to be made to a patient, the unprocessed abutment (2) comprised by the implant system (S) according to the present invention is processed using various production systems (S1) illustrated in figures 5-10 in compliance with the mouth-jaw structure and the prosthetic tooth structure of the patient, and then said abutment (2) is placed to the site of treatment by means of the implant (1) comprised by the implant system (S). After the implant (1) is fixed to the jawbone, the treatment can be completed by fixing a prosthetic tooth to the free side of the processed abutment. Thus, in place of a two-step treatment in which first the implant (1) is fixed and then the abutment (2) is fixed to the implant (1) according to the prior art, a single-step treatment is carried out using the system (S) according to the present invention such that the treatment period and therefore the painful period experienced by the patient are reduced. Additionally, since the implant (1) and the unprocessed abutment (2) have a monolithic structure, it becomes possible both to perform a customized implant treatment, and to avoid the incompliance problem of the implant-abutment connection. Additionally, the costs are reduced by eliminating the need to use an external screw in the implant-abutment connection and the problems encountered during this mounting process when the screw breaks, the abutment breaks and so forth are avoided.

An exemplary embodiment may be given to clarify the advantages of the system (S) according to the present invention, wherein the panoramic x-ray of the mouth-jaw of the respective patient is performed before the treatment is initiated. Using this radiograph, a surgical guide is prepared by means of a dental CAD program for determining the depth and the angle of the implant and for being used during the surgical operation. When a surgical guide is prepared according to the prior art, first the prosthetic tooth to be applied over the implant is designed and then suitable places are selected in the mouth for this prosthesis and the bone, such that the surgical guide is prepared for the surgical operation. While the place, type, depth, and the angle of the implant is planned in this process, the properties of an abutment to be connected to the implant can also be designed. Thus, while the surgical guide is prepared in dental laboratories or milling centers, the monolithic implant system (S) according to the present invention can also be prepared easily. The prepared system (S) can be delivered to the dentist together with the surgical guide, and the customized implant system (S) can be applied to the patient in the same session following the surgical operation.

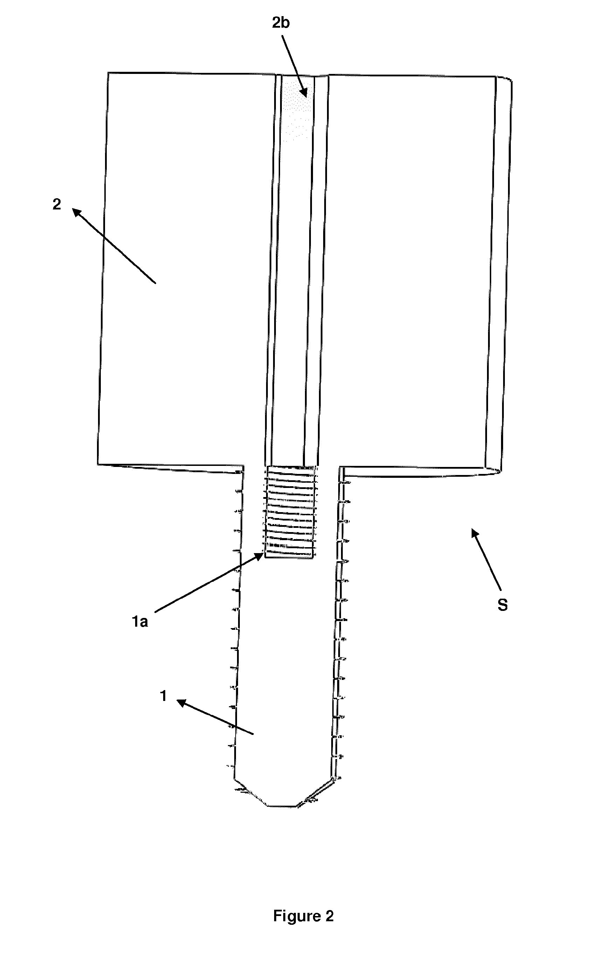

In a representative embodiment illustrated in Figure 2, the system (S) according the present invention comprises at least one socket (2b) provided in said abutment (S) and suitable for the placement of at least one fixation apparatus (not illustrated in the figures) providing the fixation of the system (S) to the jawbone. This socket (2b) is preferably in a polygonal form and the system (S) is fastened to the jawbone using this apparatus by placing said fixation apparatus into the socket (2b) after the unprocessed abutment (2) is customized (i.e. processed). Thus, the system (S) according to the present invention can be fixed to the jawbone in a more secure manner.

In another representative embodiment of the present invention as illustrated in the figures, the system (S) according to the present invention comprises at least one connection member (2a) disposed on the abutment (2). This connection element (2a) can either be in the form of a protrusion or a recess, or in the form of a channel extending along the abutment (2). As illustrated in the figures, said connection member (2a) allows to easily mount the system (S) according to the present invention to a production system (S1) wherein an unprocessed abutment (2) is customized, said system (S) being preferably disposed on both mutual sides on the unprocessed abutment (2).

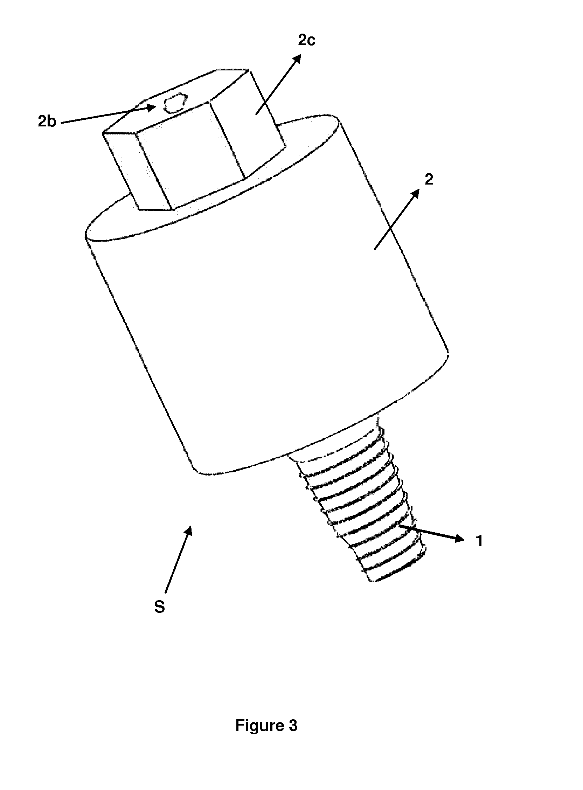

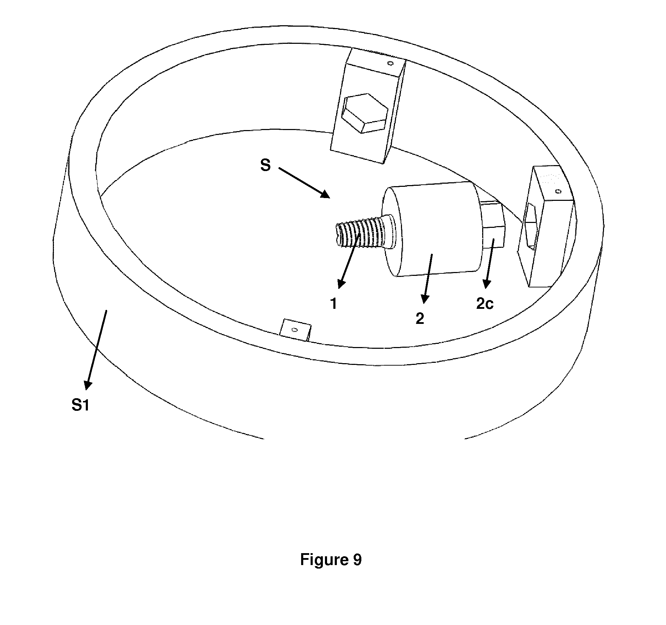

In another embodiment of the present invention as illustrated in Figure 3, the system (S) according to the present invention comprises at least one retaining member (2c) disposed on the free side of the unprocessed abutment (2) where the prosthetic tooth is placed. This retaining member (2c) preferably has a polygonal form, and can be easily fastened to another embodiment of the production system (S1) of the system (S) according to the present invention illustrated in Figure 9. After the unprocessed abutment (1) is customized, this retaining member (2c) is preferably ripped off from the unprocessed abutment.

In another alternative embodiment according to the present invention, the system (S) comprises at least one thread (1 a) disposed towards the interior of the implant (1) on the side of the implant (1) which is connected to the unprocessed abutment (2) (see Figure 2). By means of a connection element engaged through this thread (1 a), the prosthetic tooth (1) and the implant (1) can be fastened to each other in a more secure manner. Thus, the prosthetic tooth can be fixed more securely in an implant system (S) comprising a conically designed abutment.

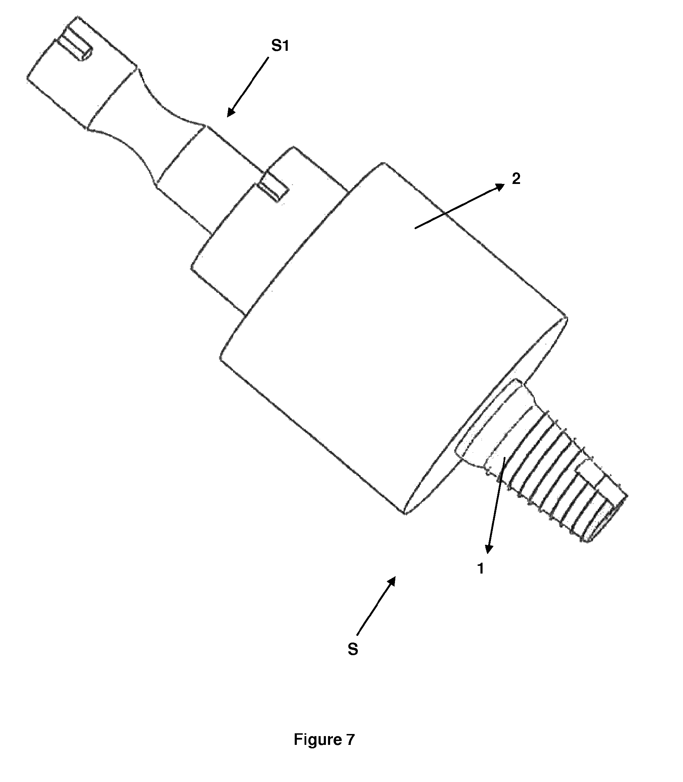

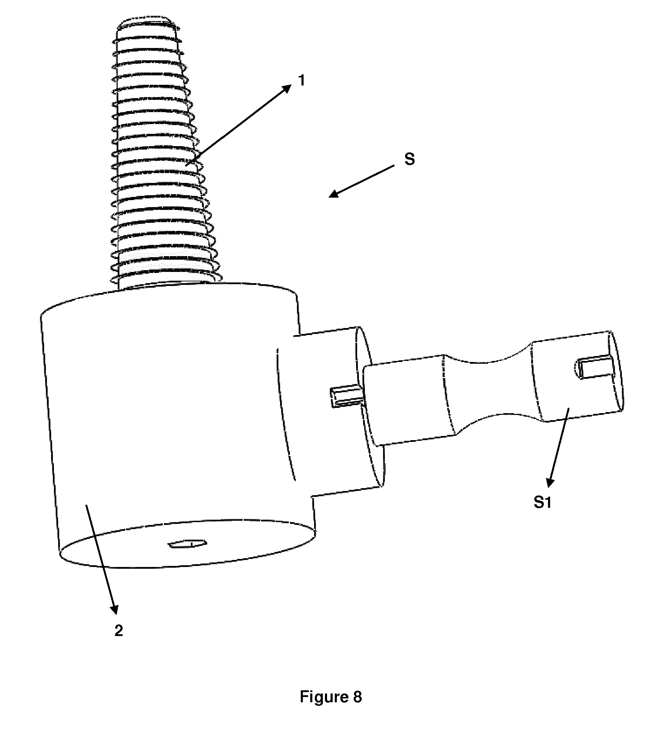

As illustrated in figures 7-8, the system (S) according to the present invention is also suitable for use in production systems (S1) where an unprocessed abutment (2) is fixed by means of adhesion. This adhesion process can either be carried out at the free side of the unprocessed abutment (2) (see Figure 7), or at a lateral surface thereof (see Figure 8).

By virtue of the implant system (S) according to the present invention, the painful treatment process experienced by the respective patient during an implant treatment is reduced to a single step and shortened accordingly. Additionally, by virtue of the monolithic structure of the implant (1) and the unprocessed abutment (2), the need for connection elements providing the connection of the implant (1) and abutment is eliminated and thus, both the production costs are reduced and the problems are avoided which may occur when these elements break down.

## Claims

1. An implant system (S) suitable for use in dental implant applications, **characterized by** comprising at least one implant (1) fixed to the jawbone to provide a tooth root for a prosthetic tooth and at least one unprocessed abutment (2) provided with at least one body having a block structure which may have different geometric shapes and being monolithic with said implant (1).

2. The implant system (S) according to Claim 1, **characterized in that** the part of said implant (1) fixed to the jawbone has a threaded structure.

3. The implant system (S) according to Claim 1, **characterized by** comprising at least one socket (2b) provided in said abutment (S) and suitable for the placement of at least one fixation apparatus providing the fixation of the system (S) to the jawbone.

4. The implant system (S) according to Claim 3, **characterized in that** said socket (2b) has a polygonal form.

5. The implant system (S) according to Claim 1, **characterized by** comprising at least one connection member (2a) disposed on the abutment (2).

6. The implant system (S) according to Claim 5, **characterized in that** said connection member (2a) is in the form of a protrusion extending along the abutment (2).

7. The implant system (S) according to Claim 5, **characterized in that** said connection member (2a) is in the form of a recess extending along the abutment (2).

8. The implant system (S) according to Claim 5, **characterized in that** said connection member (2a) is in the form of a channel extending along the abutment (2).

9. The implant system (S) according to any of the claims 5 to 8, **characterized in that** said connection member (2a) is disposed at two mutual sides of the unprocessed abutment (2).

10. The implant system (S) according to Claim 1, **characterized by** comprising at least one retaining member (2c) disposed on the free side of the unprocessed abutment (2) where the prosthetic tooth is placed.

11. The implant system (S) according to Claim 10, **characterized in that** said retaining member (2c) has a polygonal form.

12. The implant system (S) according to Claim 1, **characterized by** comprising at least one - thread (1 a) disposed towards the interior of the implant (1) on the side of the implant (1) which is connected to the unprocessed abutment (2).
